# EUROPÄISCHE PATENTSCHRIFT

(11) **EP 3 584 030 B1**
(45) Veröffentlichungstag und Bekanntmachung des Hinweises auf die Patenterteilung: **23.02.2022**
(21) Anmeldenummer: 19175026.4
(22) Anmeldetag: 17.05.2019
(51) Int. Cl.: B23K 35/00, B23K 35/02, B23K 35/36, B23K 35/365, B23K 35/368, B23K 35/40, C22C 13/00, B23K 35/26, B23K 103/10

(54) **NO-CLEAN-FLUSSMITTELSYSTEME SOWIE LÖTMITTEL ZUM WEICHLÖTEN VON ALUMINIUM**
NO-CLEAN FLUX SYSTEMS AND SOLDER MATERIALS FOR SOFT SOLDERING OF ALUMINIUM
SYSTÈMES DE FLUX SANS NETTOYAGE AINSI QU'AGENT DE SOUDAGE DESTINÉ AU SOUDAGE TENDRE DE L'ALUMINIUM

(30) Priorität: 30.05.2018 DE 102018112982
(43) Veröffentlichungstag der Anmeldung: 25.12.2019
(73) Patentinhaber: Stannol GmbH & Co. KG, 42551 Velbert (DE)
(72) Erfinder: Mönninghoff, Sven, 58300 Wetter (DE)
(74) Vertreter: Buse, Mentzel, Ludewig Patentanwaltskanzlei

(56) Entgegenhaltungen:
- EP-A1- 2 862 667
- WO-A1-2015/151099
- WO-A1-2015/185946
- CN-B- 104 607 826
- DE-A1-102015 108 485
- US-B1- 8 070 047
- NNAEMEKA J.N. NNAJI ET AL: "Morpholine and piperazine based carboxamide derivatives as corrosion inhibitors of mild steel in HCl medium", JOURNAL OF MOLECULAR LIQUIDS, Bd. 230, 1. März 2017 (2017-03-01), Seiten 652-661, XP055632193, NL ISSN: 0167-7322, DOI: 10.1016/j.molliq.2017.01.075
- S. ZOR ET AL: "Effect of ethylene diaminetetraacetic acid on the corrosion of aluminum in chloride solutions", MATERIALS SCIENCE, Bd. 44, Nr. 6, 1. November 2008 (2008-11-01), Seiten 850-856, XP055632188, Boston ISSN: 1068-820X, DOI: 10.1007/s11003-009-9140-4

## Beschreibung

Die Erfindung betrifft No-Clean-Flussmittelsysteme und Lötmittel zur Verwendung beim Weichlöten von Oberflächen oder elektronischen Bauteilen aus Aluminium bzw. Aluminiumlegierungen, aber auch Zink, Kupfer, Silber, Gold, Zinn, Nickel und deren Legierungen.

Das Weichlöten ist in der Aufbau- und Verbindungstechnik, insbesondere in der Elektrotechnik und Elektronik weit verbreitet. Lotverbindungen werden dort in der Regel mittels einer Weichlotlegierung auf Zinnbasis unter Zuhilfenahme eines Flussmittels durchgeführt. Hierbei stellt die Lotlegierung z. B. eine elektrisch leitende Verbindung der elektronischen Bauteile mit der Leiterplatte her. Um die Oberflächen der Fügepartner für das Löten vorzubereiten, enthalten Lötmittel zusätzlich ein Flussmittel, welches die Aufgabe hat, Metalloxide von den Oberflächen zu entfernen. Bekannte Flussmittel enthalten eine harzartige Trägersubstanz und einen Aktivator, der die zu verbindenden Oberflächen der Bauteile aktiviert und für eine Lotverbindung vorbereitet. Nach dem Lötprozess verbleiben Rückstände des Flussmittels auf dem Lötgut. Diese Rückstände können bei der weiteren Anwendung unter bestimmten Umwelteinflüssen (Wärme, Feuchtigkeit, elektrische Spannung, ...) zu Problemen, wie z.B. Korrosion, Dendritenwachstum, Kurzschlüssen, führen. Um dies zu verhindern bestehen zwei Möglichkeiten. Es kann eine Reinigung nach dem Löten erfolgen. Oder die Rückstände müssen chemisch und physikalisch so gestaltet sein, dass die vorbenannten Problematiken ausgeschlossen sind und die Rückstände auf dem Lötgut verbleiben können. Aus ökonomischen und ökologischen Gründen ist eine Reinigung gelöteter Teile möglichst zu vermeiden. Es werden sehr häufig sogenannte No-Clean-Lötmittel eingesetzt, die nach dem Lötprozess auf dem Lötgut verbleiben können.

In einigen Anwendungen wird aus mechanischen Gesichtspunkten oder aus Preis- bzw. Gewichtsgründen der Ersatz von Kupfer als Bauteilmaterial durch Aluminium angestrebt. Da sich Aluminiumoberflächen im Allgemeinen nur sehr schlecht durch Weichlöten verbinden lassen, sind für die Lötverbindungen solcher Bauteile die Lötmittel anzupassen.

Es ist bekannt zum Weichlöten von Aluminium ein Lötmittel aus einer Lotlegierung auf Zinnbasis und einem Flussmittel zu verwenden, welches beispielsweise aufgrund seines, verglichen mit anderen anorganischen Fluoriden, niedrigen Schmelzpunktes Ammoniumbifluorid enthält. Dieser Aktivator kann die Aluminiumoxidschicht aufbrechen und so das Weichlöten der Aluminiumbauteile ermöglichen. Ammoniumbifluorid ist stark korrosiv und greift die Metalloberflächen an, so dass es unbedingt notwendig ist, Reste solcher Flussmittel von den gelöteten Bauteilen zu entfernen, d.h. eine nachträgliche Reinigung ist unbedingt notwendig. Darüber hinaus ist Ammoniumbifluorid als giftig klassifiziert.

Aus dem Dokument DE 10 2015 108 485 A1 ist des Weiteren ein Röhrenlot zum Weichlöten von Aluminium bekannt, welches neben einer bekannten Lotlegierung auf Zinnbasis ein Flussmittel verwendet, welches ein modifiziertes Kolophonium als Trägerharzsubstanz, Ammoniumbifluorid und Triethanolamin verwendet. Durch das Trägerharz und durch die Zugabe des flüssigen Triethanolamins, eines schwachen Komplexbildners und Korrosionsinhibitors, das bei der Formulierung insbesondere auch als Lösungsvermittler zwischen dem Trägerharz und im Harz unlöslichen Ammoniumbifluorid wirkt, sollen nachträgliche Korrosionen verhindert werden, so dass nachträgliche Waschvorgänge für bestimmte, unkritische Anwendungen nicht erforderlich seien. Das giftige und korrosive Ammoniumbifluorid verbleibt demzufolge eingebettet in der Harzmatrix auf den gelöteten Teilen. Ein Triethanolamin wird auch als Lösungsvermittler bei dem Flussmittel gemäß dem Dokument DE 10 2015 108 485 A1 verwendet. Es wird auch Bifluorid, nämlich das giftige Ammoniumhydrogenbitluorid, als Aktivator eingesetzt, der sich als korrosiv erwiesen hat.

Des Weiteren ist aus dem Dokument CN 104 607 826 B und EP 2 862 667 A1 jeweils ein Flussmittel zum Weichlöten von Aluminium bekannt, welches ein Fluorid als Anion verwendet. Dieses Flussmittel wird in nachteiliger Weise aus giftiger Flusssäure (HF) bzw. ätzender Fluorborsäure (HBF₄) einerseits und gesundheitsgefährdenden Diaminen gebildet. Die WO2015/185946 A1 offenbart Lötflussmittelzusammensetzungen.

Aufgabe der vorliegenden Erfindung ist es, ein Flussmittelsystem mit einem Aktivator zum Weichlöten von Aluminium oder Aluminiumlegierungen zur Verfügung zu stellen, wobei der Aktivator nicht giftig ist. Die Flussmittelsysteme und Lötmittel sollen möglichst nicht korrosiv sein, um zum einen eine einfache Handhabung schon im Herstellungsprozess (Schutz von Personal und Maschinen) aber zum anderen auch im Lötprozess zu ermöglichen. Es wird insbesondere angestrebt, eine Reinigung von Bauteilen nach dem Löten zu vermeiden und damit eine breitere Anwendung der Lötmittel auch im Bereich der Elektronikindustrie zu erreichen. Daher werden auch Klassifizierungen der Lötmittel gemäß der allgemein akzeptierten Normen J-STD 004 bzw. J-STD 004B in die Klassen L1 oder M1 angestrebt, so dass dem geschulten Nutzer sofort klar ist, dass es sich bei diesen Lötmitteln um sogenannte No-Clean Lötmittcl handelt, deren Rückstände nach dem Lötprozess nicht zwingend entfernt werden müssen.

Diese Aufgabe wird mit einem nicht korrosiven Flussmittelsystem mit den Merkmalen des Anspruchs 1 gelöst. Das neue Flussmittelsystem beinhaltet einen nicht giftigen Aktivator oder ein Gemisch von nicht giftigen Aktivatoren und bis zu 99 Gew.-% einer Trägerharzsubstanz. Zusätzlich kann bis 15 Gew.% einer Protonenquelle im Flussmittelsystem enthalten sein.

Der Aktivator für das neue Flussmittelsystem zum Weichlöten von Aluminium bzw. Aluminiumlegierungen enthält
- als Anion eine potentielle Fluoridquelle und
- als Kation ein quarternäres Ammoniumion oder ein Imidazoliumion.

Aktivatoren können sowohl Fluoride und Bifluoride als auch komplexe Metall-, Halbmetall- oder Nichtmetallfluoride sein. Das Anion des Aktivators stellt also eine Fluoridquelle dar. Das Anion ist wahlweise ein
Fluorid F⁻
Hexafluorophosphat PF₆⁻
Tetrafluoroborat BF₄⁻
Tetrafluoroaluminat AlF₄⁻
Bifluorid HF₂⁻
komplexes Nichtmetall-, Halbmetall- oder Metallfluorid EFₓ^{y-}.

Das Kation ist in der ersten Ausführungsform ein quarternäres Ammonium-Kation der Formel

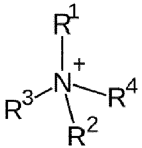

Die Reste R¹, R², R³, R⁴ stellen gleiche oder unterschiedliche organische Reste dar. Diese organischen Reste sind gleiche oder unterschiedliche organische Gruppen, nämlich lineare, cyclische oder verzweigte Kohlenwasserstoffgruppen mit 1 bis 20 Kohlenstoffatomen (C1 bis C20). Dies sind beispielsweise Alkylgruppen, Arylgruppen aber auch Polyalkylenoxidgruppen oder Kombinationen davon. Vorzugsweise sind die organischen Reste Methyl-, Ethyl-, Butyl-, Benzylgruppen oder Kombinationen davon.

Bei der zweiten Ausführungsform ist das Kation ein 1,3-Dialkylimidazolium-Kation der Formel 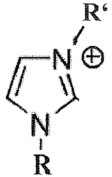 wobei die Reste R, R' und R" Alkylgruppen darstellen, nämlich lineare Kohlenwasserstoffgruppen mit 1 bis 8 Kohlenstoffatomen (C1 bis C8). Verbindungen, die diese Art von Kationen enthalten, werden im Allgemeinen als ionische Flüssigkeiten bezeichnet. Ein Beispiel eines solchen neuen Aktivators ist 1-Butyl-2,3-dimethylimidazoliumtetrafluoroborat.

Die vorbeschriebenen Aktivatoren sind einzeln oder als Mischung Bestandteil der neuen Flussmittelsysteme, welche neben dem Aktivator in bekannter Weise eine Trägersubstanz umfassen. Das Flussmittelsystem enthält 1 bis 20 Gew.-% an Aktivatoren, mindestens 1 Gew.-%, um eine ausreichende Wirkung zu erzielen und höchstens 20 Gew.-%, um Korrosion bzw. eine Reinigung nach dem Lötprozess zu verhindern.

Die neuen Aktivatoren stellen sogenannte Amphiphilc dar, die sowohl in unpolaren als auch polaren Medien löslich sind, sodass sie sich in unpolaren Trägersubstanzen aber auch in polaren Lösungsmitteln wie Alkoholen oder gar Wasser lösen. Bei einem Verbleib einer solchen Aktivator-/Trägersubstanzmischung auf der zu verlötenden oder verlöteten Bauteiloberfläche ist nicht mit diesbezüglichen Korrosionserscheinungen zu rechnen, da diese Verbindungen wahrscheinlich in der Form von sogenannten Ionenpaaren in einem unpolaren Medium vorliegen. In vorteilhafter Weise sind diese Aktivatoren mit den Fluoridquellen in der Trägersubstanz in der Wärme löslich und es ist eine gleichmäßige Verteilung des Aktivators in der Trägersubstanz möglich. Es wird ein klares homogenes Flussmittelsystem erhalten, in dem der Aktivator vollständig in der Trägersubstanz gelöst ist oder es wird bei einer geringeren Löslichkeit des Aktivators bei niedrigen Temperaturen ein trübes, jedoch homogenes Flussmittelsystem erhalten.

Als Trägersubstanzen für das Flussmittelsytem werden verwendet: Kolophonium, hydriertes oder teilhydriertes Kolophonium, verestertes Kolophonium (z.B. Methyl-, Glycerol- oder Pentaerythrytolester), hydroxymethyliertes Kolophonium, dimerisiertes Kolophonium, acrylsäuremodifiziertes Kolophonium, fumarsäuremodifiziertes Kolophonium, Polyethylenglykole, Polymere wie Polyethylen, Polystyrol, Polypropylen, oxidierte Polyethylene sowie andere bekannte Trägersubstanzen. Die vorgenannten Komponenten können einzeln oder Mischungen davon die Trägersubstanz bilden. Besonders bevorzugt ist die Verwendung von Kolophoniumderivaten. Die Trägersubstanz ist in einem Gewichtsanteil von 0 bis 99 Gew.-% im Flussmittelsytem vorhanden.

Um die Oberflächen der Fügepartner für das Löten vorzubereiten, wird unter Wärmeanwendung das Flussmittelsystem oder das Lötmittel an die Lötstellen appliziert. Der zusammen mit der schmelzflüssigen Trägersubstanz aufgebrachte Aktivator aktiviert die Lötstellen und die Lotlegierung stellt eine Verbindung zwischen den Fügepartnern, z.B. zwischen elektronischen Bauteilen und der Leiterplatte, her. Nach dem Weichlöten erstarrt die Trägersubstanz, z.B. ein Harz, auf der Leiterplatte und in dem Harz werden der Aktivator bzw. die Ionen des Aktivators festgehalten. Durch eine solche Einkapselung der Ionen im Harz können die Ionen auch dann nicht auf der Leiterplattenoberfläche wandern, wenn elektrische Felder anliegen. Die Harze, welche als Trägersubstanz verwendet werden sind hydrophob, so dass auch ggf. eindringende Feuchtigkeit, die Ionen nicht zu einer Bewegung anregen kann. Aufgrund der Einkapselung der Ionen im Harz wird der Aktivator elektrisch inaktiv. Bei Verwendung dieser neuen Flussmittelsysteme ist daher eine nachträgliche Reinigung der Leiterplatten nicht notwendig.

Eine große Anzahl der von der obigen Definition erfassten Aktivatoren ist darüber hinaus nach der CLP-Verordnung als nicht giftig klassifiziert. In vorteilhafter Weise kann bei vielen Anwendungen aufgrund der vergleichsweise guten Löslichkeit der neuen Aktivatoren, auf die zusätzliche Zugabe von Korrosioninhibitoren, Komplexbildnern oder Cosolventien wie das reproduktionstoxische N-(2-Hydroxyethyl)ethylendiamin oder das Triethanolamin, welches in seiner oxidierten Form der Nitrilotriessigsäure als karzinogen eingestuft ist, verzichtet werden.

Werden an eine Lötstelle höhere Anforderungen bezüglich der Korrosionsbeständigkeit gestellt, vergleichbar beispielsweise einem "Salzwasser-Tauchtest" ("salt water immersion test") oder einem Salzkammersprühnebeltest, so kann Korrosion durch die Zugabe von Korrosionsinhibitoren verhindert bzw. erheblich verlangsamt werden. Das oben genannte Triethanolamin zeigt sich in solchen Tests als relativ unwirksam. Das reproduktionstoxische N-(2-Hydroxyethyl)ethylendiamin zeigt gute Inhibitionseigenschaften, dessen Verwendung ist aber aufgrund seiner gesundheitsschädlichen Eigenschaften unerwünscht. Es kann im Rahmen von Korrosionstests als Referenzstandard dienen.

### Besonders geeignet sind einerseits Ethylendiamin-Derivate der Formel

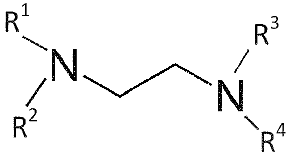

wobei die Reste R¹, R², R³ und R⁴ gleiche oder verschiedene Gruppen sind, ausgewählt aus den folgenden:
- Methylgruppe ( CH3- ),
- Ethylgruppe ( CH₃-CH₂- ),
- 2-Hydroxyethylgruppe ( -CH₂-CH₂-OH ),
- 2-Hydroxypropylgruppe ( -CH₂-CHOH-CH₃ ),
- 2-Acetylethylgruppe (-CH₂-CH₂-O-CO-CH₃),
- 2-Acetylpropylgruppe 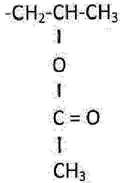
- Essigsäureestergruppen

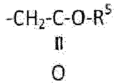

Hierbei ist der Rest R⁵ eine gerade oder verzweigte Alkylgruppe mit 1 bis 8 Kohlenstoffatomen (C1 bis C8).

### Geeignet sind andererseits Piperazin-Derivate der Formel

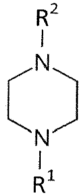

Hierbei sind die Reste R¹ und R² gleiche oder verschiedene Reste, ausgewählt aus der folgenden Gruppe:
- Wasserstoff (H)
- Methylgruppe ( CH₃- ),
- Ethylgruppe ( CH₃-CH₂- ),
- 2-Hydroxyethylgruppe ( -CH₂-CH₂-OH ),
- 2-Hydroxypropylgruppe ( -CH₂-CHOH-CH₃ ),
- 2-Acetylethylgruppe (-CH₂-CH₂-O-CO-CH₃),
- 2-Acetylpropylgruppe 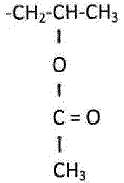
- Essigsäureestergruppen

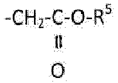

Hierbei ist der Rest R5 eine gerade oder verzweigte Alkylgruppe mit 1 bis 8 Kohlenstoffatomen (C1 bis C8).

Die Korrosionsinhibitoren werden bevorzugt mit einem Massenanteil von bis zu 10% dem Flussmittelsystem hinzugegeben. Die vorgenannten Korrosionsinhibitoren übertrafen das bereits kommerziell eingesetzten N-(2-Hydroxyethyl)ethylendiamin in den Korrosionsinhibitionseigenschaften. Diese Korrosionsinhibitoren besitzen zudem laut Hersteller- und Lieferanteninformationen keine reproduktionstoxischen Eigenschaften. Besonders bevorzugt sind folgende Korrosionsinhibitoren, nämlich
das Tetrakis-N,N,N',N'-(2-hydroxyethyl)-ethylendiamin,
das Tetrakis-N,N,N',N'-(2-hydroxypropyl)-ethylendiamin,
das N-(2-Hydroxethyl)-piperazin und
das Bis-N,N'- (2-hydroxyethyl)-piperazin.

Ein solches Flussmittelsytem, welches den neuen Aktivator und eine Trägersubstanz enthält, kann in dieser Form zum Löten verwendet werden. Bei einer Ausführungsform ist das Flussmittelsystem in fester Form ein Bestandteil eines Lötdrahts, wie beispielsweise eines Röhrenlots. Bei einer weiteren Ausführungsform wird durch Auflösung in Lösungsmitteln, wie beispielweise Alkoholen oder Alkohol/Wasser-Mischungen ein flüssiges Flussmittel erhalten, das beispielsweise in Wellen- oder Selektivlötprozessen zum Einsatz kommen kann. Durch den Einsatz von entsprechenden Verdickungsmitteln werden ebenfalls Flussmittelpasten zum Aufstreichen auf zu verlötende Komponenten hergestellt. Diese Flussmittelpasten können dann in bekannter Weise durch Zugabe von Lotpulvern zu Lotpasten verarbeitet werden.

Bei einer vorteilhaften Ausführungsform wird dem Flussmittelsystem bis 15 Gew.-% einer Protonenquelle wie einer Carbonsäure mit 1 bis 20 Kohlenstoffatomen (C1 bis C20), bevorzugt Dicarbonsäuren wie Adipinsäure, Bernsteinsäure oder Glutarsäure zugesetzt, besonders bevorzugt Adipinsäure. Anstatt der Carbonsäure, welche insbesondere als Protonenquelle die Aktivität des Flussmittels erhöht, können auch organisch substituierte Ammoniumhalogenide (Chloride, Bromide, Iodide), bevorzugt Triethylammoniumchlorid zugesetzt werden. Diese Substanzen verbessern auch die Ausbreitung des Flussmittels auf der Metalloberfläche, z.B. der Aluminiumoberfläche.

Nachfolgend werden einige Ausführungsbeispiele angeführt.

### Beispiele mit Drahtflussmittel DFM 1

Es wurden die Oberflächen folgender Metallplatten
A199,5 (Dicke 0,5 mm)
Al99Si1 (Dicke 0.11mm)
AlCuMg1 (Dicke 1 mm)
Kupfer (Dicke 0.5 mm)
Messing (Dicke 0.5 mm)
   mit einem Röhrenlot, gefüllt mit 3,5 Gew.-% des Flussmittel DFM 1 aus
87,5 Gew.-% vollhydriertem Kolophonium
7,5 Gew.-% Tetrabutylammoniumfluorid-Trihydrat (TBAF)
5 Gew.-% Adipinsäure
und dem bleifreien Standardlot Sn99Cu1 gelötet.

### Beispiele mit Drahtflussmittel DFM 2

Es wurden die Oberflächen folgender Metallplatten
A199,5 (Dicke 0,5 mm)
Al99Si1 (Dicke 0.11mm) AlCuMg1 (Dicke 1 mm)
Kupfer (Dicke 0.5 mm)
Messing (Dicke 0.5 mm)
   mit einem Röhrenlot, gefüllt mit 3,5 Gew.-% des Flussmittels DFM 2 aus
85 Gew.-% vollhydriertem Kolophonium
7,5 Gew.-% TBAF
2,5 Gew.-% Benzyltrimethylammoniumfluorid-Hydrat
5 Gew.-% Adipinsäure
   und dem bleifreien Standardlot
Sn99Cu1
   gelötet.

### Beispiele mit Drahtflussmittel DFM 3

Es wurden die Oberflächen folgender Metallplatten
AlMg1 (Dicke 1 mm)
AlMgSi1 (Dicke 1mm)
   mit einem dritten Flussmittel (DFM 3) aus
75 Gew.-% vollhydriertes Kolophonium
20 Gew.-% Tetraethylammoniumfluorid-Hydrat
5 Gew.-% Adipinsäure
und jeweils dem bleifreien Standardlot Sn99Cu1 gelötet.

Gute Lötergebnisse wurden des Weiteren mit folgenden Lotlegierungen erzielt: Sn99Cu1, Sn93Cu3, Sn95Sn5Ni0.01, Sn92Ag3Cu5Ni0.01, Sn60Pb40, Sn18Pb80Ag2, Sn42Bi57Ag1, Sn91Zn9, Sn97Ag3, Sn96.5Ag3Cu0.5.

Die folgenden Aluminiumlegierungen konnten ebenfalls erfolgreich gelötet werden: Al88Si12, AlMg4.5Mn0.7Zn.

Die neuen Flussmittelsystem eigenen sich neben dem Weichlöten von Bauteilen aus Aluminium bzw. Aluminiumlegierungen auch zum Weichlöten von Zink, Kupfer, Silber, Gold, Zinn, Nickel und deren Legierungen.

Es wurden folgende Ausführungsbeispiele flüssiger Flussmittel (FM) untersucht:

### Beispiel FM 1:

20 Gew.-% DFM 1
80 Gew.-% Isopropanol

Prüflinge aus Aluminium, Kupfer und Messing wurden in das Flussmittel FM 1 getaucht und dann in einem Lötbad (Sn96.5Ag3Cu0.5) bei 320°C erfolgreich verzinnt.

### Beispiel FM 2:

20 Gew.-% DFM 2
80 Gew.-% Isopropanol

Prüflinge aus Aluminium, Kupfer und Messing wurden in die Flussmittel FM 2 getaucht und dann in einem Lötbad (Sn96.5Ag3Cu0.5) bei 320°C erfolgreich verzinnt.

### Korrosionstests

Die Prüflinge aus Kupfer und Aluminium, die mit den Röhrenloten, gefüllt mit DFM 1 bzw. DFM 2, gelötet wurden, wurden des Weiteren einem Korrosionstest unterworfen, in dem die einzelnen Prüflinge 3 Wochen einer Temperatur von 40°C bei einer relativen Luftfeuchte von 93 % ausgesetzt waren. Es zeigte sich bei den vorgenannten Prüflingen aus Kupfer bzw. Aluminium bei Verwendung der Flussmittel DFM 1 und DFM 2 keine Korrosionserscheinungen.

### Kupferspiegeltest

Die Kupferspieltests gemäß der Norm J STD-004 zeigten keinen Durchbruch bei einer Benutzung der Flussmittel FM 1 und FM 2.

### SIR-Test

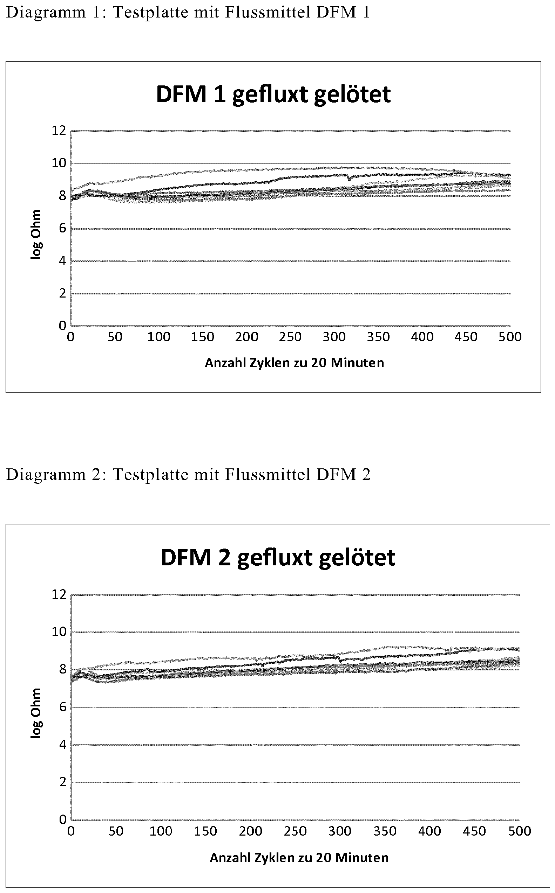

Mit den beiden Flussmitteln DFM 1 und DFM 2 wurde ein standardisierter SIR-Test (Surface Insulation Resistance) gemäß der Norm J-STD 004 durchgeführt. Dazu wurden jeweils 25%ige Lösungen der Flussmittel in Isopropanol hergestellt und auf die Testleiterplatten (B24-Kamm; Stegbreite 400µm und Stegabstände 500µm, Oberfläche Kupfer) aufgetragen. Nach einer erfolgten Wcllcnlötung bei 265°C (weitere Lötbedingungen: Vorheizung 350°C, Lötwinkel 7°, Geschwindigkeit 100cm/min) mit Sn96.5Ag3.0Cu0.5 wird an die gelötete Testplatte für 168 Stunden bei der definierten Atmosphäre von 85°C und 85% relativer Luftfeuchte eine Dauerspannung von 50V angelegt und alle 20 Minuten eine Oberflächenwiderstandsmessung bei einer Messspannung von 50V vorgenommen (siehe Diagramme 1 und 2; "gefluxt, gelötet", je 2 Leiterplatten mit jeweils 4 Messkämmen).

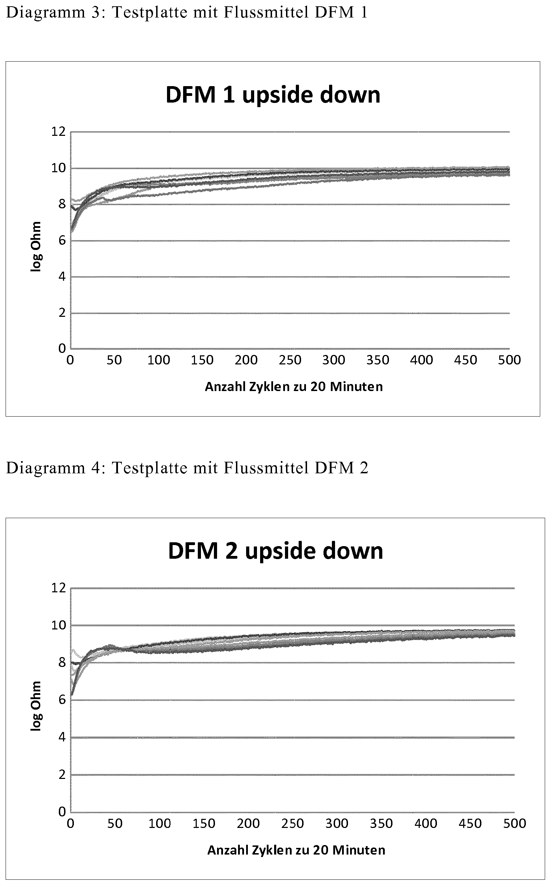

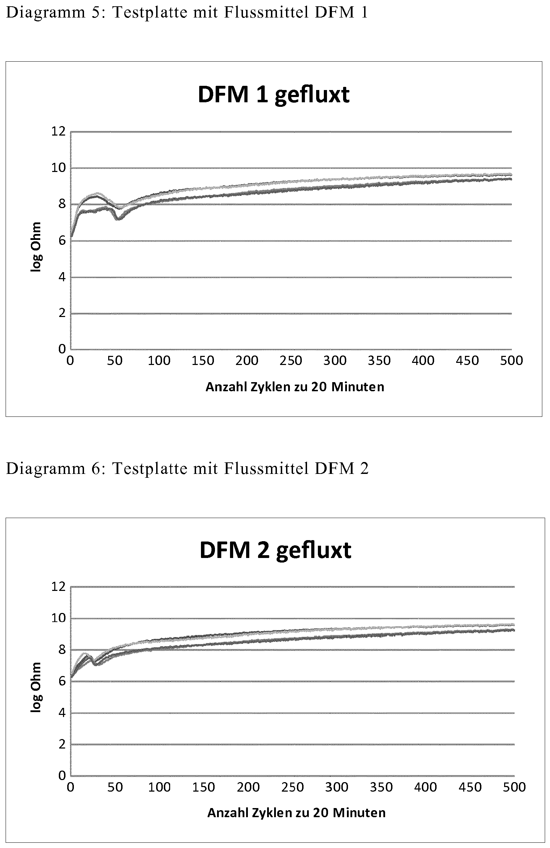

Neben den gelöteten Leiterplatten wurden auch nicht gelötete Leiterplatten einem SIR-Test unterzogen. Zum einen wurden thermisch unbelastete gefluxte Leiterplatten vermessen (siehe Diagramme 5 und 6; "gefluxt"; je 1 Leiterplatte mit jeweils 4 Messkämmen) und zum anderen wurden gefluxte Leiterplatten verwendet, die mit der Unterseite der Leiterplatten durch die Welle gefahren wurden (siehe Diagramme 3 und 4; "upside down", je 2 Leiterplatten mit jeweils 4 Kämmen). Die Endwerte der Kurvenverläufe der SIR-Messungen nach 168 Stunden liegen alle oberhalb von 10⁸ Ohm und die optische Inspektion der Leiterplatten nach der Messung ergeben, dass die beiden Flussmittel DFM 1 und DFM 2 die Kriterien der Norm J-STD 004 zum Bestehen des SIR-Tests erfüllen.

In Kombination mit den weiteren oben durchgeführten Tests nach der Norm J-STD 004 können die beiden Beispiele DFM 1 und DFM 2 als Flussmittel der Kategorie REM1 eingestuft werden. Dies bedeutet, dass in bestimmten Fällen das Lötgut oder die Leiterplatten, die mit den beiden Lötmitteln gelötet wurden, nicht gereinigt werden müssen und die oben genannten Drahtflussmittel DFM1 und 2 mit dem allgemein gebräuchlichen Begriff "No-Clean" charakterisiert werden können.

## Patentansprüche

1. Flussmittelsystem umfassend eine Trägersubstanz und einen Aktivator,
**dadurch gekennzeichnet, dass**
zur Verwendung beim Weichlöten von Bauteilen aus Aluminium bzw. Aluminiumlegierungen das Flussmittelsystem aus
- mindestens 1 Gew.-% eines Aktivator oder eines Gemischs von Aktivatoren,
- bis 99 Gew.-% einer Trägersubstanz,
- bis 15 Gew.-% einer Protonenquelle,
- bis zu 10 Gew.-% eines oder mehrerer Korrosionsinhibitoren besteht,
- wobei der Aktivator als Anion eine potentielle Fluoridquelle besitzt und
- wobei der Aktivator als Kation ein quaternäres Ammoniumion der Formel 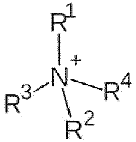
oder
der Aktivator ein 1,3-Dialkylimidazolium-Kation der Formel 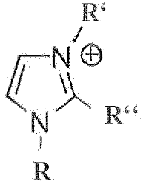 enthält,
- wobei die vier Reste R¹, R², R³, R⁴ des quaternären Ammoniumions gleiche oder unterschiedliche organische Reste darstellen,
- wobei die Reste R, R' und R" des 1,3-Dialkylimidazolium-Kations Alkylgruppen darstellen, nämlich lineare Kohlenwasserstoffgruppen mit 1 bis 8 Kohlenstoffatomen (C1 bis C8)
und
- wobei der Aktivator in der Trägersubstanz gelöst oder zumindest homogen verteilt vorliegt.

2. Flussmittelsystem nach Anspruch 1, **dadurch gekennzeichnet, dass** die organischen Reste R¹, R², R³, R⁴ lineare, cyclische oder verzweigte Kohlenwasserstoffgruppen mit 1 bis 20 Kohlenstoffatomen, beispielsweise Alkylgruppen, Arylgruppen, Polyalkylenoxidgruppen oder Kombinationen davon sind, besonders bevorzugt sind Methyl-, Ethyl-, Propyl-, Butyl-, Benzylgruppen oder Kombinationen davon.

3. Flussmittelsystem nach Anspruch 1 oder 2, **dadurch gekennzeichnet, dass** bis 20 Gew.-% Aktivator in der Trägersubstanz verteilt vorliegt.

4. Flussmittelsystem nach Anspruch 1, **dadurch gekennzeichnet, dass** das Anion des Aktivators wahlweise ein
Fluorid (F⁻ ) oder
Hexafluorophosphat (PF₆⁻) oder
Tetrafluoroborat (BF₄⁻) oder
Tetrafluoroaluminat (AlF₄⁻) oder
Bifluorid (HF₂⁻) oder
komplexes Nichtmetall-, Halbmetall oder Metallfluorid ist (EFₓ^{Y-}).

5. Flussmittelsystem nach Anspruch 1, **dadurch gekennzeichnet, dass** im Flussmittel als Protonenquelle eine Carbonsäure, Dicarbonsäure oder ein organisch substituiertes Ammoniumhalogenid enthalten ist.

6. Flussmittelsystem nach einem der Ansprüche 1 bis 5, **dadurch gekennzeichnet, dass** die Trägersubstanz aus einem Naturharz oder einem modifizierten Naturharz, oder aus einem Polyethylenglykol oder einem Polymer oder einer Mischung aus diesen besteht, vorzugsweise aus hydriertem Kolophonium.

7. Flussmittelsystem nach Anspruch 1, **dadurch gekennzeichnet, dass** es einen oder mehrere Korrosionsinhibitoren bis zu einem Masseanteil von 10% enthält, wobei die Korrosionsinhibitoren N-substituierte Ethylendiamine der Formel 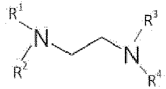 oder N-substituierte Piperazine der Formel 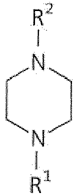 sind.

8. Verwendung des Flussmittelsystems gemäß einem der Ansprüche 1 bis 7 für Lötmittel, nämlich gelöst in geeigneten Lösungsmitteln als flüssiges Flussmittel oder durch eine zusätzliche Zugabe von Verdickungsmitteln als Flussmittelpaste.

9. Verwendung des Flussmittelsystems gemäß einem der Ansprüche 1 bis 7 für Lötmittel, nämlich als Bestandteil eines Lötdrahts, beispielsweise eines Röhrenlots.

10. Verwendung des Flussmittelsystems gemäß einem der Ansprüche 1 bis 7 für Lötmittel, nämlich zusammen mit bleifreien als auch mit bleihaltigen Lotpulvern als Bestandteil einer Lotpaste.

## Claims

1. A flux system comprising a carrier substance and an activator, **characterised in that,**
for use in the soft soldering of components made of aluminium or aluminium alloys, the flux system consists of
- at least 1% by weight of an activator or a mixture of activators,
- up to 99 % by weight of a carrier substance,
- up to 15% by weight of a proton source,
- up to 10% by weight of one or more corrosion inhibitors,
- wherein the activator as an anion has a potential fluoride source and
- wherein the activator as a cation has an ammonium ion of the formula 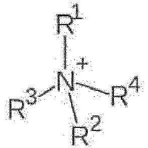
or
the activator is a 1,3-dialkylimidazolium cation of the formula 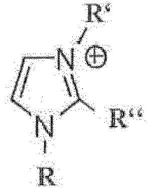 ,
- wherein the four residues R¹, R², R³, R⁴ of the quaternary ammonium ion represent identical or different organic residues,
- the residues R, R' and R" of the 1,3-dialkylimidazolium cation representing alkyl groups, namely linear hydrocarbon groups having 1 to 8 carbon atoms (C1 to C8)
and
- wherein the activator is dissolved or at least homogeneously distributed in the carrier substance.

2. Flux system according to claim 1, **characterised in that** the organic residues R¹, R², R³, R⁴ are linear, cyclic or branched hydrocarbon groups with 1 to 20 carbon atoms, for example alkyl groups, aryl groups, polyalkylene oxide groups or combinations thereof, particularly preferred are methyl, ethyl, propyl, butyl, benzyl groups or combinations thereof.

3. Flux system according to claim 1 or 2, **characterised in that** up to 20% by weight activator is distributed in the carrier substance.

4. Flux system according to claim 1, **characterised in that** the anion of the activator is optionally a
fluoride (F⁻) or
hexafluorophosphate (PF₆⁻) or
tetrafluoroborate (BF₄⁻) or
tetrafluoroaluminate (AlF₄⁻) or
bifluoride (HF₂⁻) or
complex non-metal fluoride, semi-metal fluoride or metal fluoride (EFx^{Y-}).

5. Flux system according to claim 1, **characterised in that** a carboxylic acid, dicarboxylic acid or an organically substituted ammonium halide is contained in the flux as a proton source.

6. Flux system according to any one of claims 1 to 5, **characterised in that** the carrier substance consists of a natural resin or a modified natural resin, or of a polyethylene glycol or a polymer or a mixture thereof, preferably hydrogenated rosin.

7. Flux system according to claim 1, **characterised in that** it contains one or more corrosion inhibitors up to a mass fraction of 10%, wherein the corrosion inhibitors are N-substituted ethylenediamines of the formula 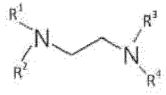 or N-substituted piperazines of the formula

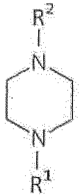

8. Use of the flux system according to any one of claims 1 to 7 for soldering agents, namely dissolved in suitable solvents as liquid flux or by an additional addition of thickening agents as flux paste.

9. Use of the flux system according to any one of claims 1 to 7 for solder, namely as a component of a solder wire, for example a tubular solder.

10. Use of the flux system according to any one of claims 1 to 7 for solder, namely together with lead-free as well as with lead-containing solder powders as a component of a solder paste.

## Revendications

1. Système de fondant comprenant une substance porteuse et un activateur, **caractérisé en ce que,**
pour l'utilisation pendant le soudage tendre de composants en aluminium ou en alliages d'aluminium, le système de fondant se compose
- d'au moins 1 % pondéral d'un activateur ou d'un mélange d'activateurs,
- de jusqu'à 99 % pondéraux d'une substance porteuse,
- de jusqu'à 15 % pondéraux d'une source de protons,
- de jusqu'à 10 % pondéraux d'un ou plusieurs inhibiteurs de corrosion,
- sachant que l'activateur possède en tant qu'anion une source potentielle de fluorure et
- sachant que l'activateur contient, comme cation, un ammonium quaternaire
de formule 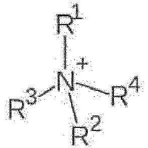
ou
**que** l'activateur contient un cation 1,3-dialkylimidazolium de 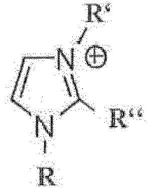 formule,
- sachant que les quatre résidus R¹, R², R³, R⁴ de l'ion ammonium quaternaire représentent des résidus organiques identiques ou différents,
- sachant que les résidus R, R' et R" du cation 1,3-dialkylimidazolium représentent des groupes alkyles, à savoir des groupes hydrocarbures linéaires comprenant entre 1 à 8 atomes de carbone (C1 à C8)
et
- sachant que l'activateur est présent dissous dans la substance porteuse ou présent au moins réparti de manière homogène.

2. Système de fondant selon la revendication 1, **caractérisé en ce que** les résidus organiques R¹, R², R³, R⁴ sont des groupes hydrocarbures linéaires, cycliques ou ramifiés comptant 1 à 20 atomes de carbone, par exemple des groupes alkyle, groupes aryle, groupes polyalkylène-oxyde, ou des combinaisons de ces groupes, avec une préférence particulière pour les groupes méthyle, éthyle, propyle, butyle, benzyle ou des combinaisons de ces groupes.

3. Système de fondant selon la revendication 1 ou 2, **caractérisé en ce qu'**il y a présence de jusqu'à 20 % pondéraux d'activateur répartis dans la substance porteuse.

4. Système de fondant selon la revendication 1, **caractérisé en ce que** l'anion de l'activateur est au choix un
Fluorure (F⁻) ou un
Hexafluorophosphate (PF₆⁻ ) ou un
Tétrafluoroborate (BF₄⁻ ) ou un
Tétrafluoroaluminate (AlF₄⁻) ou un
Bifluorure (HF₂⁻ ) ou un
fluorure complexe non métallique, semi-métallique ou métallique (EF_{X}^{Y-}).

5. Système de fondant selon la revendication 1, **caractérisé en ce que** dans le fondant se trouve, comme source de protons, un acide carbonique, acide dicarbonique ou un halogénure d'ammonium à substitution organique.

6. Système de fondant selon l'une des revendications 1 à 5, **caractérisé en ce que** la substance porteuse se compose d'une résine naturelle ou d'une résine naturelle modifiée, ou d'un polyéthylène glycol ou d'un polymère ou d'un mélange de ces substances, de préférence de colophane hydratée.

7. Système de fondant selon la revendication 1, **caractérisé en ce qu'**il contient un ou plusieurs inhibiteurs de corrosion jusqu'à une part massique de 10 %, sachant que les inhibiteurs de corrosion sont des diamines d'éthylène à substitution N de formule 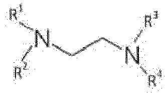 ou des pipérazines à substitution N de formule

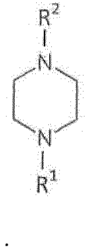

8. Utilisation du système de fondant selon l'une des revendications 1 à 7 pour des agent de soudage, à savoir dissous dans des solvants appropriés, comme fondant liquide, ou comme fondant pâteux par un ajout supplémentaire de produits épaississants.

9. Utilisation du système de fondant selon l'une des revendications 1 à 7 pour des agents de soudage, à savoir comme partie intégrante d'un fil à souder, par ex. d'un fil à souder tubulaire.

10. Utilisation du système de fondant selon l'une des revendications 1 à 7 pour des agents de soudage, à savoir avec des poudres de soudage sans plomb mais aussi contenant du plomb en tant que partie intégrante d'une pâte de soudage.
